# NOUVEAU FASCICULE DE BREVET EUROPEEN

(11) **EP 2 708 436 B2**
(45) Date de publication et mention de la décision concernant l'opposition: **24.11.2021**
(45) Mention de la délivrance du brevet: 05.12.2018
(21) Numéro de dépôt: 13183416.0
(22) Date de dépôt: 06.09.2013
(51) Int. Cl.: B61D 27/00, F25B 25/00, F24F 3/06

(54) **Véhicule ferroviaire comprenant un habitacle et un dispositif de climatisation**
Schienenfahrzeug mit einem Innenraum und einer Klimatisierungsanlage
Railway vehicle with cabin and air conditioning unit

(30) Priorité: 13.09.2012 FR 1258595
(43) Date de publication de la demande: 19.03.2014
(73) Titulaire: ALSTOM Transport Technologies, 93400 Saint-Ouen (FR)
(72) Inventeur: Mortreux, Francis, 78600 MAISONS-LAFFITTE (FR)
(74) Mandataire: Lavoix

(56) Documents cités:
- EP-A2- 1 662 212
- EP-A2- 2 461 109
- DE-A1- 2 417 158
- FR-A1- 2 902 864
- JP-A- 2006 029 744
- NL-A- 8 003 375
- US-A- 5 265 437
- US-A1- 2008 245 503
- US-B2- 6 457 324

## Description

La présente invention concerne un véhicule ferroviaire comprenant un dispositif de climatisation d'air, notamment pour la climatisation de l'air intérieur dans un habitacle. En particulier, l'invention concerne un dispositif de climatisation pour un habitacle de véhicule ferroviaire, mais elle pourrait dans des variantes ne faisant pas partie de l'invention être utilisée pour tout autre type de véhicule (routier, maritime ou aérien) nécessitant une climatisation, ou pour tout type de local.

On connaît déjà, dans l'état de la technique, un dispositif de climatisation comportant un circuit dans lequel circule un frigorigène, comprenant de manière classique un compresseur, un condenseur, un organe de détente et un évaporateur.

Le frigorigène est habituellement un fluide à changement de phase de type HFC (acronyme de HydroFluoroCarbones), par exemple un frigorigène connu sous la dénomination R134a, R407c, R410, R744 ou R152a. Un tel frigorigène est relativement polluant et/ou inflammable.

Dans un tel dispositif de climatisation, l'évaporateur est généralement traversé par l'air qui entre dans l'habitacle (ou local) à climatiser. En d'autres termes, le circuit de frigorigène est agencé à proximité de l'habitacle, si bien qu'en cas de fuite, du frigorigène peut s'écouler dans l'habitacle (ou local).

Or, l'intrusion de frigorigène dans l'habitacle n'est pas souhaitable, notamment lorsque, comme évoqué précédemment, le frigorigène est polluant et/ou inflammable. On connaît également le FR-A-2902864 qui décrit un dispositif de climatisation.

L'invention a notamment pour but de remédier à cet inconvénient en fournissant un dispositif de climatisation permettant d'éviter les risques de fuites dans l'habitacle.

A cet effet, l'invention a notamment pour objet un véhicule ferroviaire selon la revendication 1.

Ainsi, le circuit primaire est entièrement logé dans le compartiment, qui est séparé de la zone de traitement de l'air, donc de l'habitacle, de manière étanche. En cas de fuite sur le circuit primaire, le frigorigène s'écoule dans le compartiment, mais ne passe pas dans l'habitacle, puisque la paroi est étanche.

De manière optionnelle, un véhicule ferroviaire selon l'invention peut comporter l'une ou plusieurs des caractéristiques suivantes, prises seules ou selon toutes les combinaisons techniquement envisageables.
- Le circuit primaire comporte un compresseur, un condenseur et un organe de détente, tous, ainsi que l'évaporateur, étant logés dans le compartiment.
- Le compresseur, le condenseur, l'organe de détente et l'évaporateur sont agencés sur un support commun.
- Le support commun est amovible depuis le compartiment.
- Le circuit primaire comporte des conduites rigides de circulation du frigorigène, reliant respectivement le condenseur à l'organe de détente, l'organe de détente à l'évaporateur, l'évaporateur au compresseur, et le compresseur au condenseur, chaque conduite rigide présentant de préférence une longueur inférieure à 50 cm.
- Le dispositif de climatisation comporte un second circuit secondaire, dans lequel circule un second fluide, ce second fluide passant par le condenseur pour y échanger sa chaleur avec le frigorigène, ce second circuit secondaire comportant au moins un second échangeur de chaleur, dans lequel le second fluide échange sa chaleur avec de l'air extérieur.
- Le second circuit secondaire comporte une seconde pompe pour la circulation du second fluide, ladite seconde pompe étant logée dans le compartiment.
- Le premier circuit secondaire comporte une première pompe pour la circulation du premier fluide, ladite première pompe étant logée dans le compartiment.
- Le premier circuit secondaire comporte des conduites reliant l'évaporateur au premier échangeur de chaleur, au moins l'une de ces conduites passant à travers la paroi étanche, un joint d'étanchéité étant prévu entre cette conduite et cette paroi étanche.
- Le dispositif de climatisation comporte un second compartiment formant la zone de traitement d'air, ce second compartiment étant ouvert de façon à communiquer avec l'air intérieur.

L'invention sera mieux comprise à la lecture de la description qui va suivre, donnée uniquement à titre d'exemple et faite en se référant aux figures annexées, parmi lesquelles :
- la figure 1 représente schématiquement un dispositif de climatisation selon un premier exemple de mode de réalisation de l'invention, et
- la figure 2 représente schématiquement un dispositif de climatisation selon un deuxième exemple de mode de réalisation de l'invention.

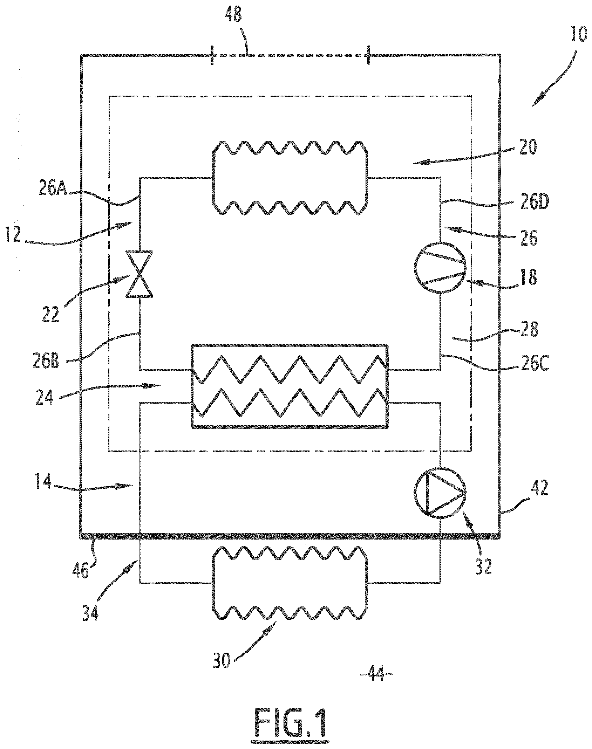

On a représenté sur la figure 1 un dispositif de climatisation 10, destiné à la climatisation d'air intérieur dans au moins un habitacle de véhicule ferroviaire. En variante ne faisant pas partie de l'invention, ce dispositif de climatisation peut être destiné à la climatisation d'air intérieur dans un habitacle de tout autre type de véhicule, ou dans tout type de local.

Le dispositif de climatisation 10 comporte un circuit primaire 12, dans lequel circule un frigorigène. Ledit frigorigène échange de la chaleur avec de l'air par l'intermédiaire d'un circuit secondaire, dit premier circuit secondaire 14.

Le circuit primaire 12 comporte de manière classique un compresseur 18, un condenseur 20, un organe de détente 22 et un évaporateur 24.

Le circuit primaire 12 comporte par ailleurs des conduites 26 de circulation du frigorigène, en particulier : une conduite 26A reliant le condenseur 20 à l'organe de détente 22, une conduite 26B reliant l'organe de détente 22 à l'évaporateur 24, une conduite 26C reliant l'évaporateur 24 au compresseur 18, et une conduite 26D reliant le compresseur 18 au condenseur 20. De préférence, les conduites 26 sont rigides.

De manière classique, le frigorigène est un fluide à changement de phase de type HFC, par exemple connu sous la dénomination R134a, R407c, R410, R744 ou R152a.

Le premier circuit secondaire 14, dans lequel circule un premier fluide, passe par l'évaporateur 24 de sorte que le premier fluide y échange sa chaleur avec le frigorigène du circuit primaire 12. Ce premier circuit secondaire 14 comporte par ailleurs au moins un premier échangeur de chaleur 30, dans lequel ledit premier fluide échange sa chaleur avec de l'air, et une première pompe 32 pour entraîner le premier fluide en circulation dans ce premier circuit secondaire 14.

Le premier circuit secondaire 14 comporte en outre des conduites 34 reliant en série l'évaporateur 24, le premier échangeur de chaleur 30 et la première pompe 32, de façon à former une boucle.

On notera que, lorsque le dispositif de climatisation 10 est installé pour son utilisation, le premier échangeur de chaleur 30 communique avec l'air intérieur de l'habitacle (ou, en variante ne faisant pas partie de l'invention, du local) à climatiser, qui forme alors une source froide pour le dispositif de climatisation 10.

Par ailleurs, le condenseur 20 forme un échangeur de chaleur communiquant avec de l'air extérieur, qui forme alors une source chaude pour le dispositif de climatisation 10.

De préférence, le premier fluide circulant dans le premier circuit secondaire 14 est un liquide de grande capacité calorifique et de grande densité, ce qui permet de réduire le volume de fluide nécessaire pour assurer l'échange thermique. Ce liquide présente une faible perte de charge en particulier à basse température pour ne pas être trop visqueux, et un point de congélation bas, idéalement inférieur à -40°C, ou du moins inférieur à - 20°C, pour ne pas geler en hiver. Par exemple, le premier fluide est un mélange monoéthylèneglycol et eau, ou un mélange de type « TIFOXIT ».

Pour mémoire, on rappellera ci-dessous le fonctionnement d'un dispositif de climatisation tel que celui selon ce premier mode de réalisation de l'invention.

Le cycle du frigorigène dans le circuit primaire 12 est classique et connu en soi.

En entrée du compresseur 18, le frigorigène est généralement en phase gazeuse. Le frigorigène y est comprimé (sa pression passe typiquement de 3 bars à 20 bars) et devient très chaud, de l'ordre de 60°C.

En passant dans le condenseur 20, le frigorigène se refroidit puis se condense. Il passe alors d'une phase gazeuse à une phase liquide, sans changer de température. En sortie de ce condenseur 20, le frigorigène est en phase liquide, à haute température et à haute pression.

Le frigorigène passe ensuite dans l'organe de détente 22, et se détend adiabatiquement. Il se refroidit, jusqu'à ce que sa pression revienne à 3 bars et sa température est d'environ 0°C. Le frigorigène forme alors un mélange liquide/gazeux passant ensuite dans l'évaporateur 24.

Dans cet évaporateur 24, le frigorigène se réchauffe en captant la chaleur du premier fluide qui circule dans le premier circuit secondaire 14. Le frigorigène change alors de phase et redevient complètement gazeux avant de rentrer de nouveau dans le compresseur 18.

Dans le premier circuit secondaire 14, le premier fluide prend des calories à l'air à climatiser (source froide) dans le premier échangeur de chaleur 30, puis fournit ces calories au frigorigène dans l'évaporateur 24.

Parallèlement, l'air extérieur (source chaude) prend des calories au frigorigène dans le condenseur 20.

On notera qu'un tel dispositif de climatisation 10 peut présenter un encombrement relativement limité pour le circuit primaire 12.

En particulier, l'évaporateur 24 est destiné à des échanges avec le premier fluide plutôt qu'avec de l'air, et nécessite donc une surface d'échange de chaleur moindre. Cet évaporateur 24 présente donc un encombrement moindre qu'un évaporateur prévu pour un échange de chaleur avec l'air.

Du fait de cet encombrement moindre, l'évaporateur 24 peut être agencé au plus près du compresseur 18, ce qui permet de réduire la longueur des conduites 26B, 26C, et de limiter l'encombrement du circuit primaire 12 dans son ensemble.

Ainsi, avantageusement, la longueur de chaque conduite 26B, 26C est inférieure à 50 cm.

On notera que, du fait de cet encombrement réduit, le circuit primaire 12 contient une quantité moindre de frigorigène, généralement moins de 4 kg.

Avantageusement, le compresseur 18, le condenseur 20, l'organe de détente 22 et l'évaporateur 24 sont agencés sur un support commun 28. En d'autres termes, le circuit primaire 12 dans son ensemble est solidaire du support commun 28, et peut donc être manipulé dans son ensemble pour son montage ou son démontage dans le dispositif de climatisation 10.

Ainsi, pour la maintenance du dispositif de climatisation 10, le circuit primaire 12 peut être démonté en un seul bloc sans que ses constituants (c'est-à-dire le compresseur 18, le condenseur 20, l'organe de détente 22 et l'évaporateur 24) soient séparés. Ainsi, il n'est pas nécessaire de procéder au démontage des conduites 26 contenant du frigorigène, si bien que l'opération de démontage du circuit primaire 12 peut être réalisée par un ouvrier de maintenance, même s'il n'est pas qualifié pour la manipulation de circuits de frigorigène.

Lorsque le dispositif de climatisation 10 est monté sur un véhicule, celui-ci subit des vibrations et divers mouvements lorsque le véhicule se déplace. Grâce au support commun 28, tous les constituants du circuit primaire 12 subissent alors simultanément les mêmes vibrations et mouvements. Ainsi, puisque les mouvements et vibrations de ces constituants 18, 20, 22, 24 sont similaires, il ne se crée pas de contrainte sur les conduites 26, ce qui réduit donc les risques d'usure et de fuite sur ces conduites 26.

Le dispositif de climatisation 10 comporte au moins un premier compartiment 42, dans lequel est logé le circuit primaire 12, donc notamment le compresseur 18, le condenseur 20, l'organe de détente 22 et l'évaporateur 24.

Le dispositif de climatisation 10 comporte également une zone de traitement d'air 44, ménagée en dehors du compartiment 42, et destinée à communiquer avec l'air intérieur, et dans laquelle est logé le premier échangeur de chaleur 30.

De préférence, la première pompe 32 est logée dans le compartiment 42. En variante, la première pompe 32 pourrait être logée en dehors du compartiment 42, par exemple dans la zone de traitement d'air 44.

Enfin, on notera que le condenseur 20 est logé à l'intérieur du compartiment 42. Ainsi, une grille 48 est prévue en regard du condenseur 20, pour permettre la communication de ce condenseur 20 avec l'air extérieur.

Au moins une paroi étanche 46 sépare le compartiment 42 de la zone de traitement d'air 44. Ainsi, en cas de fuite de frigorigène sur le circuit primaire 12, celui-ci s'écoule dans le compartiment 42, et ne s'écoule pas dans la zone de traitement d'air 44 grâce à la paroi étanche 46. La zone de traitement d'air 44 étant destinée à communiquer avec l'habitacle (ou, en variante ne faisant pas partie de l'invention, le local), on remarque que cet habitacle (ou, en variante ne faisant pas partie de l'invention, ce local) est ainsi protégé de pollution par frigorigène.

Il apparaît que, puisque le premier échangeur de chaleur 30 est logé dans la zone de traitement d'air 44 et que l'évaporateur 24 est logé dans le compartiment 42, les conduites 34 du premier circuit secondaire passent à travers la paroi étanche 46. On prévoit alors un joint d'étanchéité autour de chaque conduite 34 dans le passage à travers la paroi étanche 46, afin de conserver l'étanchéité de cette paroi 46.

De préférence, on prévoit un circuit primaire 12 relativement compact. La compacité du circuit primaire 12 permet de limiter le risque de fuites. En effet, du fait de la quantité limitée de frigorigène contenue par un circuit primaire 12 compact, les risques pour que la paroi étanche 46 cède sous la pression de frigorigène ayant fuit dans le compartiment 42 sont très limités. En d'autres termes, du fait de cette faible quantité de frigorigène, il apparaît que la paroi étanche 46 est suffisante pour interdire les fuites de frigorigène depuis le compartiment 42 jusqu'à la zone de traitement d'air 44.

Avantageusement, le support commun 28 est amovible depuis ce compartiment 42. Ainsi, le circuit primaire 12 peut être facilement démonté pour des raisons de maintenance, simplement en déconnectant les conduites 34 du premier circuit secondaire de l'évaporateur 24.

Conformément à une variante non représentée, le dispositif de climatisation 10 comporte un second compartiment formant la zone de traitement d'air 44. Ce second compartiment est alors ouvert de façon à communiquer avec l'air intérieur de l'habitacle (ou, en variante ne faisant pas partie de l'invention, du local).

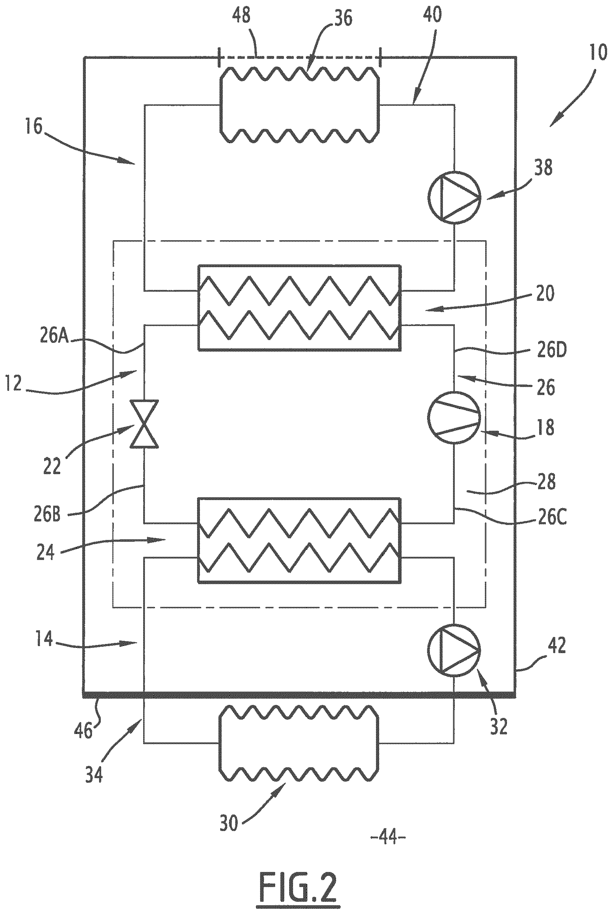

On a représenté sur la figure 2 un dispositif de climatisation 10 selon un deuxième exemple de mode de réalisation de l'invention. Sur cette figure 2, les éléments analogues à ceux décrits précédemment sont désignés par des références identiques.

Conformément à ce deuxième mode de réalisation, le dispositif de climatisation 10 est du type doublement indirect. En d'autres termes, le dispositif de climatisation 10 comporte, en plus du circuit primaire 12, dans lequel circule le frigorigène, deux circuits intermédiaires, dits premier circuit secondaire 14 et second circuit secondaire 16, ledit frigorigène échangeant de la chaleur avec de l'air par l'intermédiaire de ces circuits secondaires 14, 16.

Le premier circuit secondaire 14 est sensiblement identique à celui qui a été décrit en référence à la figure 1.

Par ailleurs, le second circuit secondaire 16, dans lequel circule un second fluide, passe par le condenseur 20, de sorte que le second fluide y échange sa chaleur avec le frigorigène du circuit primaire 12. Ce second circuit secondaire 16 comporte également au moins un second échangeur de chaleur 36, dans lequel le second fluide échange sa chaleur avec de l'air extérieur, et une seconde pompe 38 pour entraîner le second fluide en circulation dans ce second circuit secondaire 16.

Le second circuit secondaire 16 comporte en outre des conduites 40 reliant en série le second échangeur de chaleur 36, le condenseur 20 et la seconde pompe 38, de façon à former une boucle.

On notera que, lorsque le dispositif de climatisation 10 est installé pour son utilisation, le second échangeur de chaleur 36 communique avec de l'air extérieur, qui forme alors une source chaude pour le dispositif de climatisation 10.

De préférence, les premier et second fluides circulant respectivement dans les premier 14 et second 16 circuits secondaires sont des liquides de grande capacité calorifique et de grande densité, pour réduire le volume de fluide nécessaire pour assurer l'échange thermique. Ces liquides présentent une faible perte de charge en particulier à basse température pour ne pas être trop visqueux, et un point de congélation bas, idéalement inférieur à -40°C, ou du moins inférieur à -20°C, pour ne pas geler en hiver. Par exemple, les premier et second fluides sont des mélanges monoéthylèneglycol et eau, ou des mélanges de type « TIFOXIT ».

Pour mémoire, on rappellera ci-dessous le fonctionnement d'un dispositif de climatisation doublement indirect tel que celui selon l'invention.

Le cycle du frigorigène dans le circuit primaire 12 est classique et connu en soi.

En entrée du compresseur 18, le frigorigène est généralement en phase gazeuse. Le frigorigène y est comprimé (sa pression passe typiquement de 3 bars à 20 bars) et devient très chaud, de l'ordre de 60°C.

En passant dans le condenseur 20, le frigorigène se refroidit puis se condense. Il passe alors d'une phase gazeuse à une phase liquide, sans changer de température. En sortie de ce condenseur 20, le frigorigène est en phase liquide, à haute température et à haute pression.

Le frigorigène passe ensuite dans l'organe de détente 22, et se détend adiabatiquement. Il se refroidit, jusqu'à ce que sa pression revienne à 3 bars et sa température est d'environ 0°C. Le frigorigène forme alors un mélange liquide/gazeux passant ensuite dans l'évaporateur 24.

Dans cet évaporateur 24, le frigorigène se réchauffe en captant la chaleur du premier fluide qui circule dans le premier circuit secondaire 14. Le frigorigène change alors de phase et redevient complètement gazeux avant de rentrer de nouveau dans le compresseur 18.

Dans le premier circuit secondaire 14, le premier fluide prend des calories à l'air à climatiser (source froide) dans le premier échangeur de chaleur 30, puis fournit ces calories au frigorigène dans l'évaporateur 24.

Dans le second circuit secondaire 16, le second fluide prend des calories au frigorigène dans le condenseur 20, puis fournit ces calories à l'air extérieur (source chaude) dans le second échangeur de chaleur 36.

On notera qu'un tel dispositif de climatisation doublement indirect permet de limiter l'encombrement du circuit primaire.

En particulier, l'évaporateur 24 et le condenseur 20 sont destinés à des échanges avec, respectivement, les premier et second fluides, plutôt qu'avec de l'air, et nécessitent donc une surface d'échange de chaleur moindre. Cet évaporateur 24 et ce condenseur 20 présentent donc un encombrement moindre que des évaporateurs et condenseurs prévus pour un échange de chaleur avec l'air.

Du fait de cet encombrement moindre, l'évaporateur 24 et le condenseur 20 peuvent être agencés au plus près du compresseur 18, ce qui permet de réduire la longueur des conduites 26, et de limiter l'encombrement du circuit primaire 12 dans son ensemble.

Ainsi, avantageusement, la longueur de chaque conduite 26 est inférieure à 50 cm.

On notera que, du fait de cet encombrement réduit, le circuit primaire 12 contient une quantité moindre de frigorigène, généralement moins de 4 kg, voire moins de 2 kg.

De préférence, la première pompe 32 et la seconde pompe 38 sont toutes deux logées dans le compartiment 42. En variante, au moins l'une de ces pompes, par exemple la première pompe 32, pourrait être logée en dehors du compartiment 42, par exemple dans la zone de traitement d'air 44.

Enfin, on notera que le second échangeur de chaleur 36 peut être logé à l'intérieur du compartiment 42. Dans ce cas, une grille 48 est prévue en regard du second échangeur de chaleur 36, pour permettre la communication de ce second échangeur de chaleur 36 avec l'air extérieur. En variante, le second échangeur de chaleur 36 peut être agencé à l'extérieur du compartiment 42.

On notera que la compacité du circuit primaire 12 permet de limiter le risque de fuites. En effet, du fait de la quantité limitée de frigorigène contenue par le circuit primaire 12, les risques pour que la paroi étanche 46 cède sous la pression de frigorigène ayant fuit dans le compartiment 42 sont très limités. En d'autres termes, du fait de cette faible quantité de frigorigène, il apparaît que la paroi étanche 46 est suffisante pour interdire les fuites de frigorigène depuis le compartiment 42 jusqu'à la zone de traitement d'air 44.

Avantageusement, le support commun 28 est amovible depuis ce compartiment 42. Ainsi, le circuit primaire 12 peut être facilement démonté pour des raisons de maintenance, simplement en déconnectant les conduites 34 du premier circuit secondaire de l'évaporateur 24, et les conduites 40 du second circuit secondaire 16 du condenseur 20.

On notera que l'invention n'est pas limitée au mode de réalisation précédemment décrit, mais pour représenter diverses variantes sans sortir du cadre des revendications. En particulier, le dispositif de climatisation pourrait comporter un circuit primaire plus complexe, comportant plusieurs voies et vannes pour relier alternativement le condenseur 20 au premier circuit secondaire 14 et l'évaporateur 24 au second circuit secondaire 16, et inverser ainsi les sources chaude et froide.

## Revendications

1. Véhicule ferroviaire, notamment tramway, comprenant un habitacle et dispositif de climatisation (10), destiné à la climatisation d'air intérieur dans l'habitacle, le dispositif de climatisation étant du type comprenant :
- un circuit primaire (12), dans lequel circule un frigorigène, comprenant notamment un évaporateur (24),
- un premier circuit secondaire (14), dans lequel circule un premier fluide, ce premier fluide passant par l'évaporateur (24) pour y échanger sa chaleur avec le frigorigène, le premier circuit secondaire (14) comprenant au moins un premier échangeur de chaleur (30) dans lequel ledit premier fluide échange sa chaleur avec l'air,
**caractérisé en ce que** le dispositif de climatisation (10) comporte :
- au moins un premier compartiment (42), dans lequel est logé le circuit primaire (12),
- une zone de traitement d'air (44), ménagée en dehors du compartiment (42) et destinée à communiquer avec l'air intérieur, et dans laquelle est logé le premier échangeur de chaleur (30), et
- au moins une paroi étanche (46), séparant le compartiment (42) de la zone de traitement d'air (44).

2. Véhicule ferroviaire selon la revendication 1, dans lequel le circuit primaire (12) comporte un compresseur (18), un condenseur (20) et un organe de détente (22), tous, ainsi que l'évaporateur (24), étant logés dans le compartiment (42).

3. Véhicule ferroviaire selon la revendication 2, dans lequel le compresseur (18), le condenseur (20), l'organe de détente (22) et l'évaporateur (24) sont agencés sur un support commun (28).

4. Véhicule ferroviaire selon la revendication 3, dans lequel le support commun (28) est amovible depuis le compartiment (42).

5. Véhicule ferroviaire selon la revendication 3 ou 4, dans lequel le circuit primaire (12) comporte des conduites rigides (26) de circulation du frigorigène, reliant respectivement le condenseur (20) à l'organe de détente (22), l'organe de détente (22) à l'évaporateur (24), l'évaporateur (24) au compresseur (18), et le compresseur (18) au condenseur (20), chaque conduite rigide (26) présentant de préférence une longueur inférieure à 50 cm.

6. Véhicule ferroviaire selon l'une quelconque des revendications 2 à 5, comportant un second circuit secondaire (16), dans lequel circule un second fluide, ce second fluide passant par le condenseur (20) pour y échanger sa chaleur avec le frigorigène, ce second circuit secondaire (16) comportant au moins un second échangeur de chaleur (36), dans lequel le second fluide échange sa chaleur avec de l'air extérieur.

7. Véhicule ferroviaire selon la revendication 6, dans lequel le second circuit secondaire (16) comporte une seconde pompe (38) pour la circulation du second fluide, ladite seconde pompe (38) étant logée dans le compartiment (42).

8. Véhicule ferroviaire selon l'une quelconque des revendications précédentes, dans lequel le premier circuit secondaire (14) comporte une première pompe (32) pour la circulation du premier fluide, ladite première pompe (32) étant logée dans le compartiment (42).

9. Véhicule ferroviaire selon l'une quelconque des revendications précédentes, dans lequel le premier circuit secondaire (14) comporte des conduites (34) reliant l'évaporateur (24) au premier échangeur de chaleur (30), au moins l'une de ces conduites (34) passant à travers la paroi étanche (46), un joint d'étanchéité étant prévu entre cette conduite (34) et cette paroi étanche (46).

10. Véhicule ferroviaire selon l'une quelconque des revendications précédentes, comportant un second compartiment formant la zone de traitement d'air (44), ce second compartiment étant ouvert de façon à communiquer avec l'air intérieur.

## Patentansprüche

1. Schienenfahrzeug, insbesondere Straßenbahn, aufweisend eine Zelle und eine Vorrichtung zur Klimatisierung (10), die vorgesehen ist zur Klimatisierung von Innenluft in der Zelle, wobei die Vorrichtung zur Klimatisierung (10) von dem Typ ist, der aufweist:
- einen Primärkreis (12), in welchem ein Kältemittel zirkuliert und der insbesondere einen Verdampfer (24) aufweist,
- einen ersten Sekundärkreis (14), in welchem ein erstes Fluid zirkuliert, wobei dieses erste Fluid durch den Verdampfer (24) passiert, um dort seine Wärme mit dem Kältemittel zu tauschen, wobei der erste Sekundärkreis (14) wenigstens einen ersten Wärmetauscher (30) aufweist, in welchem das erste Fluid seine Wärme mit Luft tauscht,
**dadurch gekennzeichnet, dass** die Vorrichtung zur Klimatisierung (10) aufweist:
- wenigstens einen ersten Raum (42), in welchem der Primärkreis (12) untergebracht ist,
- eine Luftbehandlungs-Zone (44), die außerhalb des Raums (42) vorliegt und dazu bestimmt ist, um mit der Innenluft zu kommunizieren, und in der der erste Wärmetauscher (30) untergebracht ist, und
- wenigstens eine dichte Wand, die den Raum (42) von der Luftbehandlungszone (44) trennt.

2. Schienenfahrzeug gemäß Anspruch 1, wobei der Primärkreis (12) einen Kompressor (18), einen Kondensator (20) und ein Expansionsorgan (22) aufweist, welche alle, und auch der Verdampfer (24), in dem Raum (42) untergebracht sind.

3. Schienenfahrzeug (10) gemäß Anspruch 2, wobei der Kompressor (18), der Kondensator (20), das Expansionsorgan (22) und der Verdampfer (24) auf einem gemeinsamen Träger (28) angeordnet sind.

4. Schienenfahrzeug gemäß Anspruch 3, wobei der gemeinsame Träger (28) von dem Raum (42) abnehmbar ist.

5. Schienenfahrzeug gemäß Anspruch 3 oder 4, wobei der Primärkreis (12) starre Leitungen (26) zur Zirkulation des Kältemittels aufweist, die respektive verbinden den Kondensator (20) mit dem Expansionsorgan (22), das Expansionsorgan (22) mit dem Verdampfer (24), den Verdampfer (24) mit dem Kompressor (18) und den Kompressor (18) mit dem Kondensator (20), wobei jede starre Leitung (26) bevorzugt eine Länge kleiner als 50cm hat.

6. Schienenfahrzeug gemäß irgendeinem der Ansprüche 2 bis 5, aufweisend einen zweiten Sekundärkreis (16), in welchem ein zweites Fluid zirkuliert, wobei dieses zweite Fluid durch den Kondensator (20) passiert, um dort seine Wärme mit dem Kältemittel zu tauschen, wobei dieser zweite Sekundärkreis (16) aufweist wenigstens einen zweiten Wärmetauscher (36), in welchem das zweite Fluid seine Wärme mit der Außenluft tauscht.

7. Schienenfahrzeug gemäß Anspruch 6, wobei der zweite Sekundärkreis (16) aufweist eine zweite Pumpe (38) zur Zirkulation des zweiten Fluid, wobei die zweite Pumpe (38) in dem Raum (42) untergebracht ist.

8. Schienenfahrzeug gemäß irgendeinem der vorhergehenden Ansprüche, wobei der erste Sekundärkreis (14) eine erste Pumpe (32) aufweist zur Zirkulation des ersten Fluid, wobei die erste Pumpe (32) in dem Raum (42) untergebracht ist.

9. Schienenfahrzeug gemäß irgendeinem der vorhergehenden Ansprüche, wobei der erste Sekundärkreis (14) Leitungen (34) aufweist, die den Verdampfer (24) mit dem ersten Wärmetauscher (30) verbinden, wobei wenigstens eine dieser Leitungen (34) durch die dichte Wand (46) hindurch passiert, wobei eine Dichtung zwischen dieser Leitung (34) und dieser dichten Wand (46) vorgesehen ist.

10. Schienenfahrzeug gemäß irgendeinem der vorhergehenden Ansprüche, aufweisend einen zweiten Raum, der die Luftbehandlungszone (44) bildet, wobei dieser zweite Raum derart offen ist, dass er mit der Innenluft kommuniziert.

## Claims

1. A rail vehicle, in particular a tramway vehicle, including a compartment and an air conditioning device (10), intended for inside air conditioning in the compartment, the air conditioning device being of the type comprising:
- a primary circuit (12), in which a refrigerant circulates, in particular comprising an evaporator (24),
- a first secondary circuit (14), in which a first fluid circulates, said first fluid passing through the evaporator (24) to exchange its heat therein with the refrigerant, the first secondary circuit (14) comprising at least one first heat exchanger (30) in which said first fluid exchanges its heat with the air,
caracterized in that the air conditioning device (10) includes:
- at least one first compartment (42), in which the primary circuit is housed (12),
- an air treatment zone (44), formed outside the compartment (42) and intended to communicate with the inside air, and in which the first heat exchanger is housed (30), and
- at least one sealed wall (46), separating the compartment (42) from the air treatment zone (44).

2. The rail vehicle according to claim 1, wherein the primary circuit (12) includes a compressor (18), a condenser (20) and an expander (22), all, in addition to the evaporator (24), being housed in the compartment (42).

3. The rail vehicle according to claim 2, wherein the compressor (18), condenser (20), expander (22) and evaporator (24) are arranged on a shared support (28).

4. The rail vehicle according to claim 3, wherein the shared support (28) is removable from the compartment (42).

5. The rail vehicle according to claim 3 or 4, wherein the primary circuit (12) includes rigid circulation ducts (26) for the refrigerant, respectively connecting the condenser (20) to the expander (22), the expander (22) to the evaporator (24), the evaporator (24) to the compressor (18), and the compressor (18) to the condenser (20), each rigid duct (26) preferably having a length smaller than 50 cm.

6. The rail vehicle according to any one of claims 2 to 5, including a second secondary circuit (16), in which a second fluid circulates, said second fluid passing through the condenser (20) to exchange its heat therein with the refrigerant, said second secondary circuit (16) including at least one second heat exchanger (36), in which the second fluid exchanges its heat with the outside air.

7. The rail vehicle according to claim 6, wherein the second secondary circuit (16) includes a second pump (38) for circulating the second fluid, said second pump (38) being housed in the compartment (42).

8. The rail vehicle according to any one of the preceding claims, wherein the first secondary circuit (14) includes a first pump (32) for circulating the first fluid, said first pump (32) being housed in the compartment (42).

9. The rail vehicle according to any one of the preceding claims, wherein the first secondary circuit (14) includes ducts (34) connecting the evaporator (24) to the first heat exchanger (30), at least one of said ducts (34) passing through the sealed wall (46), a sealing gasket being provided between said duct (34) and said sealed wall (46).

10. The rail vehicle according to any one of the preceding claims, including a second compartment forming the air treatment zone (44), said second compartment being open so as to communicate with the inside air.
